# EUROPÄISCHE PATENTSCHRIFT

(11) **EP 1 407 219 B1**
(45) Veröffentlichungstag und Bekanntmachung des Hinweises auf die Patenterteilung: **31.05.2006**
(21) Anmeldenummer: 02754833.8
(22) Anmeldetag: 05.07.2002
(51) Int. Cl.: G01B 5/00

(54) **KOORDINATENMESSGERÄT MIT ZUSATZWÄRMEQUELLE**
CO-ORDINATE MEASURING DEVICE WITH ADDITIONAL HEAT SOURCE
APPAREIL DE MESURE DE COORDONNEES DOTE D'UNE SOURCE DE CHALEUR SUPPLEMENTAIRE

(30) Priorität: 16.07.2001 DE 10133824
(43) Veröffentlichungstag der Anmeldung: 14.04.2004
(73) Patentinhaber: Werth Messtechnik GmbH, 35394 Giessen (DE)
(72) Erfinder: CHRISTOPH, Ralf, 35394 Giessen (DE)
(74) Vertreter: Stoffregen, Hans-Herbert
(86) Internationale Anmeldenummer: PCT/EP2002/007469
(87) Internationale Veröffentlichungsnummer: WO 2003/008898

(56) Entgegenhaltungen:
- EP-A- 0 382 414
- EP-A- 0 690 286
- EP-A- 1 036 883
- EP-A- 1 083 024
- EP-A- 1 130 443
- US-A- 3 319 456
- US-A- 4 448 545
- US-A- 5 179 786
- US-A- 5 515 705
- US-A- 5 809 211
- PATENT ABSTRACTS OF JAPAN vol. 1996, no. 12, 26. Dezember 1996 (1996-12-26) & JP 08 215983 A (HITACHI SEIKI CO LTD), 27. August 1996 (1996-08-27)
- PATENT ABSTRACTS OF JAPAN vol. 2000, no. 13, 5. Februar 2001 (2001-02-05) & JP 2000 271836 A (MAKINO MILLING MACH CO LTD), 3. Oktober 2000 (2000-10-03)

## Beschreibung

Die Erfindung bezieht sich auf ein Koordinatenmessgerät mit zumindest einem diesem zugeordneten und/oder in diesem integrierten Wärme abgebenden Element wie Motor oder Lichtquelle sowie eine dem Element zugeordnete Zusatzwärmequelle. Ferner nimmt die Erfindung Bezug auf ein Verfahren zum Betreiben eines Koordinatenmessgerätes mit zumindest einem diesem zugeordneten und/oder in diesem integrierten Wärme abgebenden Element wie Motor oder Lichtquelle, wobei dem Element eine Zusatzwärmequelle zugeordnet wird.

Um mit hoher Präzision Objekte mittels eines Koordinatenmessgerätes zu messen, ist es erforderlich, dass Messverfälschungen aufgrund sich ändernder Temperaturen unterbleiben. Hierzu wird nach der DE 38 23 373 A1 vorgeschlagen, dass ein Koordinatenmesstaster wahlweise durch einen Temperatursensor ausgewechselt wird, um die Temperatur des zu messenden Objektes zu bestimmen. Alternativ besteht die Möglichkeit, die Temperatur berührungslos zu messen.

Ein weiterer dem Stand der Technik zu entnehmender Vorschlag sieht vor, thermoisolierte Messtische bei Koordinatenmessgeräten zu verwenden, um Einflüsse von Temperaturschwankungen auszuschließen (s- DE.Z.: Koordinatenmessgeräte von Carl Zeiss. Prismo. Der Maßstab. S. 13).

Auch wenn man nach dem ersten Vorschlag Temperaturschwankungen des zu messenden Objektes erfassen und kompensieren kann, ist nicht ausgeschlossen, dass es aufgrund unterschiedlicher Temperaturen zum Beispiel in Randbereichen der Lagerung bzw. Temperaturänderungen in der Lagerung zu die Messwerte beeinflussenden Verformungen kommt. Die Verwendung thermoisolierter Tische führt zu einer erheblichen Verteuerung von Koordinatenmessgeräten. Unabhängig hiervon können temperaturbedingte Verformungen der Halterungen entsprechender thermoisolierter Tische wiederum zu Messverfälschungen führen.

EP-A-0 690 286 beschreibt einen temperaturkompensierten Messkopf für eine Koordinatenmessmaschine. Bei diesem Messkopf ist jedem Wärme abgebenden Element wie Motor eine Zusatzwärmequelle gleicher Leistung zugeordnet, welche im Wechsel zum Wärme abgebenden Element aktiviert wird, so dass die auf den Messkopf einwirkende Gesamtleistung konstant oder nahezu konstant ist.

Der vorliegenden Erfindung liegt das Problem zu Grunde, ein Koordinatenmessgerät sowie ein Verfahren der eingangs genannten Art so weiterzubilden dass temperaturbedingte Messabweichungen bzw. -verfälschungen unterbleiben, ohne dass es insbesondere einer Temperaturbestimmung des zu messenden Objektes bedarf.

Erfindungsgemäß wird das Problem durch ein Koordinatenmessgerät der eingangs genannten Art im Wesentlichen dadurch gelöst, dass jedem Wärme abgebenden Element eine regelbare Zusatzwärmequelle derart zugeordnet ist, dass auf das Koordinatenmessgerät einwirkende Gesamtleistung konstant oder nahezu konstant ist. Dabei wird als Zusatzwärmequellle insbesondere ein Heizwiderstand verwendet.

Erfindungsgemäß wird jedem Warme abgebenden Element ein regelbarer Heizwiderstand deran zugeordnet, dass Leistung P₁ des Wärme abgebenden Elementes und Leistung P₂ des regelbaren Heizwiderstandes sich belaufen auf P₁ + P₂ = const. oder P₁ + P₂ ≈ const. Dabei kann mehreren Wärme abgebenden Elementen ein gemeinsamer regelbarer Heizwiderstand zugeordnet sein. Selbstverständlich kann auch jedem Wärme abgebenden Element ein gesonderter regelbarer Heizwiderstand zugeordnet sein.

Wärme abgebende Elemente, bei denen es sich um betriebsbedingte Wärmequellen wie zum Beispiel Motoren wie Stellmotoren oder Lichtquellen handelt, und Zusatzwärmequellen sind dabei derart räumlich einander zugeordnet, dass auf das Koordinatenmessgerät einwirkende Leistung konstant oder nahezu konstant ist, so dass infolge dessen das Koordinatenmessgerät eine konstante Temperatur aufweist und somit Messverfälschungen ausgeschlossen sind.

Der Grundgedanke der Erfindung sieht folglich vor, dass technisch bedingte Wärmequellen wie zum Beispiel Lichtquellen oder Motoren, die bei Koordinatenmessgeräten zwingend erforderlich sind, auch dann zu einer Temperaturveränderung im Koordinatenmessgerät bzw. deren Temperaturumgebung nicht führen, wenn die Wärmequellen mit unterschiedlicher Last betrieben oder zum Beispiel ausgeschaltet sind. Wird zum Beispiel eine Lichtquelle gedrosselt, so wird entsprechend die der Lichtquelle zugeordnete Zusatzwärmequelle wie Heizwiderstand geregelt, um unveränderte Temperaturbedingungen sicherzustellen. Beim Drosseln einer Lichtquelle wird demzufolge die Leistung eines Heizwiderstandes erhöht und umgekehrt. Bei einem Motor kann die von diesem und der Zusatzwärmequelle abzugebende Leistung zum Beispiel auf die Maximalleistung des Motors abgestellt sein. Da die aktuelle Leistung unter der Maximalleistung liegt, wird der Heizwiderstand so geregelt, dass die von dem Heizwiderstand abgegebene Wärme und die des Motors konstant ist.

Aufgrund der erfindungsgemäßen Lehre erfolgt keine rechnerische Kompensation von auftretenden Temperaturänderungen. Vielmehr wird das Koordinatenmessgerät in einer Umgebung genutzt, in der unabhängig von den Wärme abgebenden Elementen wie Komponenten des Koordinatenmessgerätes eine konstante Temperatur vorherrscht. Man erzielt demzufolge ein thermisch stabiles Koordinatenmessgerät.

Ein Verfahren zum Betreiben eines Koordinatenmessgerätes mit zumindest einem diesem zugeordneten und/oder in diesem integrierten Wärme abgebenden Element wie Motor oder Lichtquelle, wobei dem Element eine Zusatzwärmequelle zugeordnet wird, zeichnet sich dadurch aus, dass jedem Wärme abgebenden Element eine Zusatzwärmequelle zugeordnet wird und die Zusatzwärmequelle derart geregelt wird, dass beim Betrieb auf das Koordinatenmessgerät einwirkende Gesamtleistung konstant oder nahezu konstant gehalten wird.

Insbesondere ist vorgesehen, dass von dem Wärme abgebenden Element aufgenommene oder abgegebene Leistung P₁ gemessen und die Zusatzwärmequelle mit einer Leistung P₂ betrieben wird, wobei P₁ + P₂ = const. oder P₁ + P₂ ≈ const. ist.

Dabei kann über die gemessene Leistung P₁ ein Heizwiderstand als die Zusatzwärmequelle auf eine Leistung P₂ derart geregelt werden, dass P₁ + P₂ = const. oder P₁ + P₂ ≈ const. ist.

Insbesondere wird dem Wärme abgebenden Element eine Zusatzwärmequelle derart zugeordnet, dass unabhängig von von dem Wärme abgebenden Element aufgenommener bzw. abgegebener Leistung das Koordinatenmessgerät in einer konstanten Temperaturumgebung betrieben wird.

Die Erfindung wird nachstehend an Hand bevorzugter Ausführungsformen näher erläutert.

Es zeigen:
- Fig. 1: eine Prinzipdarstellung eines Koordinatenmessgerätes,
- Fig. 2: eine Prinzipdarstellung eines einem Koordinatenmessgerät zugeordneten Motors und
- Fig. 3: eine Prinzipdarstellung einer einem Koordinatenmessgerät zugeordneten Beleuchtung.

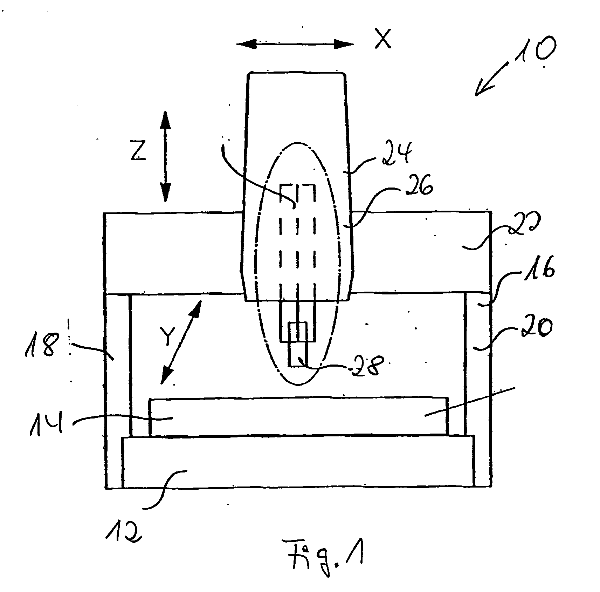

Fig. 1 ist rein prinzipiell ein Koordinatenmessgerät 10 mit einem zum Beispiel aus Granit bestehendem Grundrahmen 12 mit Messtisch 14 zu entnehmen, auf dem ein nicht dargestelltes Objekt anordbar ist, um dieses zu messen. Entlang dem Grundrahmen 12 ist ein Portal 16 in Y-Richtung verstellbar. Hierzu sind Säulen oder Ständer 18, 20 gleitend auf dem Grundrahmen 12 abgestützt. Von den Säulen 18, 20 geht eine Traverse 22 aus, entlang der, also in X-Richtung, ein Schlitten 24 verstellbar ist, der seinerseits eine Pinole oder Säule 26 aufnimmt, die in Z-Richtung verstellbar ist. Von der Pinole oder Säule 26 geht ein Messsensor 28 aus, bei dem es sich um solche üblicher Bauart wie taktil arbeitende, optotaktil arbeitende Bildverarbeitungssensoren oder Laserabstandssensoren handeln kann. Insoweit wird jedoch auf hinlänglich bekannte Techniken und Konstruktionen verwiesen.

Um sicherzustellen, dass das Koordinatenmessgerät 10 thermisch stabil ist, dass also das Koordinatenmessgerät 10 in einer Umgebung betrieben wird, in der unabhängig von Wärme abgebenden Komponenten wie Beleuchtung, Motoren oder ähnliches eine konstante Temperatur vorherrscht, ist erfindungsgemäß vorgesehen, dass jedem Wärme abgebenden Element eine Zusatzwärmequelle derart zugeordnet ist, dass auf das Koordinatenmessgerät einwirkende Wärmeleistung konstant ist.

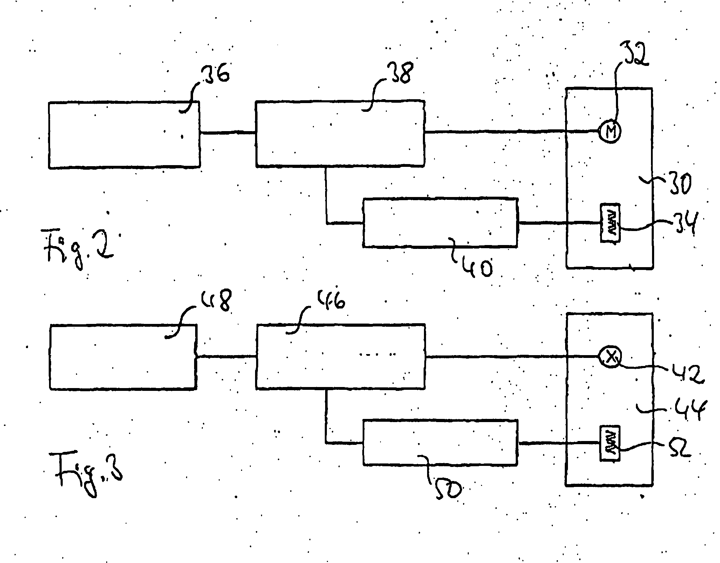

Die Realisierung diesbezüglicher Maßnahmen ist rein prinzipiell den Fig. 2 und 3 zu entnehmen. So wird nach Fig. 2 die Leistung eines in einem Koordinatenmessgerät 30 benutzten Elektromotors 32 gemessen, um in Abhängigkeit von der Leistungsaufnahme bzw. -abgabe eine Zusatzwärmequelle wie einen Heizwiderstand 34 derart zu regeln, dass die Wärmebelastung des Koordinatenmessgerätes 30 konstant ist. Es erfolgt von einer Motorsteuerung 36 eine Leistungsmessung 38, um über diese den Heizwiderstand 34 über eine Heizwiderstandsregelung zu regeln.

Soll nach Fig. 3 bei einer Lichtquelle 42, die einem Koordinatenmessgerät 44 zugeordnet ist, eine konstante Wärmeeinwirkung auf das Koordinatenmessgerät 44 erreicht werden, so erfolgt eine Leistungsmessung 46 der Lichtsteuerung 48, um sodann über eine Heizwiderstandsregelung 50 einen Heizwiderstand 52 derart zu regeln, dass ebenfalls die Wärmebelastung des Koordinatenmessgeräts 44 konstant ist.

Durch die erfindungsgemäßen Maßnahmen ist sichergestellt, dass das Koordinatenmessgerät 10, 30, 44 thermisch stabil ist mit der Folge, dass durch technisch bedingte Wärmequellen keine Temperaturänderungen für das Koordinatenmessgerät 10, 30, 44 derart wirksam werden können, dass Messverfälschungen bzw. Messungenauigkeiten auftreten.

## Patentansprüche

1. Koordinatenmessgerät (10, 30, 44) mit zumindest einem diesem zugeordneten und/oder in diesem integrierten Wärme abgebenden Element (32, 42) wie Motor oder Lichtquelle sowie einer dem Element (32, 42) zugeordneten Zusatzwärmequelle (34, 52),
**dadurch gekennzeichnet,**
**dass** jedem Wärme abgebenden Element (32, 42) eine regelbare Zusatzwärmequelle (34, 52) derart zugeordnet ist, dass die auf das Koordinatenmessgerät (10, 30, 44) einwirkende Gesamtleistung konstant oder nahezu konstant ist.

2. Koordinatenmessgerät nach Anspruch 1,
**dadurch gekennzeichnet,**
**dass** die Zusatzwärmequelle ein Heizwiderstand (34, 52) ist.

3. Koordinatenmessgerät nach Anspruch 1 oder 2,
**dadurch gekennzeichnet,**
**dass** dem Wärme abgebenden Element (32, 42) die Zusatzwärmequelle (34, 52) derart zugeordnet ist, dass das Koordinatenmessgerät (10, 30, 44) unabhängig von der Leistung des Wärme abgebenden Elementes eine konstante oder nahezu konstante Temperatur aufweist.

4. Koordinatenmessgerät nach zumindest einem der vorhergehenden Ansprüche,
**dadurch gekennzeichnet,**
**dass** das Koordinatenmessgerät (30) zumindest einen Antriebsmotor (32) aufweist, der mit einem Wärmelastwiderstand (34) so im Wechsel betreibbar ist, dass resultierende Wärmebelastüng konstant ist.

5. Koordinatenmessgerät nach zumindest einem der vorhergehenden Ansprüche,
**dadurch gekennzeichnet,**
**dass** das Koordinatenmessgerät eine Beleuchtung (42) aufweist, die in einem oder mehreren Wärmelastwiderständen (52) derart im Wechsel steuerbar ist, dass resultierende Wärmebelastung des Koördinatenmessgerätes (44) konstant ist.

6. Verfahren zum Betreiben eines Koordinatenmessgerätes (10, 30, 44) mit zumindest einem diesem zugeordneten und/oder in diesem integrierten Wärme abgebenden Element (32, 42) wie Motor oder Lichtquelle, wobei dem Element eine Zusatzwärmequelle (34, 52) zugeordnet wird,
**dadurch gekennzeichnet,**
**dass** jedem Wärme abgebenden Element (32, 42) eine Zusatzwärmequelle (34, 52) zugeordnet wird und die Zusatzwärmequelle (34, 52) derart geregelt wird, dass die beim Betrieb auf das Koordinatenmessgerät (10, 30, 44) einwirkende Gesamtleistung konstant oder nahezu konstant gehalten wird.

7. Verfahren nach Anspruch 6,
**dadurch gekennzeichnet,**
**dass** von dem Wärme abgebenden Element (32, 42) aufgenommene oder abgegebene Leistung P₁ gemessen und die Zusatzwärmequelle (34, 52) mit einer Leistung P₂ betrieben wird, wobei P₁ + P₂ = const. oder P₁ + P₂ ≈ const. ist.

8. Verfahren nach Anspruch 6 oder 7,
**dadurch gekennzeichnet,**
**dass** über die gemessene Leitung P₁ ein Heizwiderstand (34, 52) als die Zusatzwärmequelle geregelt wird.

9. Verfahren nach zumindest einem der vorhergehenden Ansprüche 6 bis 8,
**dadurch gekennzeichnet,**
**dass** jedem Wärme abgebenden Element (32, 42) ein regelbarer Heizwiderstand (34, 52) derart zugeordnet ist, dass Leistung P₁ des Wärme abgebenden Elementes und Leistung P₂ des regelbaren Heizwiderstandes sich beläuft auf P₁ + P₂ = const. oder P₁ + P₂ ≈ const.

10. Verfahren nach zumindest einem der vorhergehenden Ansprüche 6 bis 8,
**dadurch gekennzeichnet,**
**dass** mehreren Wärme abgebenden Elementen (32, 42) ein gemeinsamer regelbarer Heizwiderstand zugeordnet ist.

11. Verfahren nach zumindest einem der vorhergehenden Ansprüche 6 bis 10,
**dadurch gekennzeichnet,**
**dass** die Zusatzwärmequellen (34, 52) dem Koordinatenmessgerät derart zugeordnet sind, dass dieses in seinem messungsbeeinflussenden Bereich unabhängig von der wirksamen Leistung des bzw. der Wärme abgebenden Elemente eine konstante oder nahezu konstante Temperatur aufweist.

12. Verfahren nach zumindest einem der vorhergehenden Ansprüche 6 bis 11,
**dadurch gekennzeichnet,**
**dass** ein oder mehrere Motoren (32) des Koordinatenmessgerätes (30) mit Heizwiderständen (34) derart im Wechsel betrieben werden, dass resultierende Wärmebelastung konstant ist.

13. Verfahren nach zumindest einem der vorhergehenden Ansprüche 6 bis 12,
**dadurch gekennzeichnet,**
**dass** Lampen einer Beleuchtung (42) des Koordinatenmessgerätes mit Heizwiderständen derart im Wechsel betrieben werden bzw. zueinander geregelt werden, dass resultierende Wärmebelastung für das Koordinatenmessgerät konstant oder nahezu konstant ist.

## Claims

1. Coordinate measuring device (10, 30, 44) with at least one heat-emitting element (32, 42) allocated to it and/or integrated with it, such as a motor or a light source, as well as one additional heat source (34, 52) allocated to the element (32, 42),
**characterized in**
**that** to each heat-emitting element (32, 42) an adjustable additional heat source (34, 52) is allocated such, that the total load acting upon the coordinate measuring device (10, 30, 44) is constant or nearly constant.

2. Coordinate measuring device according to claim 1,
**characterized in**
**that** the additional heat source is a heat resistor (34, 52).

3. Coordinate measuring device according to claim 1 or 2,
**characterized in**
**that** the additional heat source (34, 52) is allocated to the heat-emitting element (32, 42) in such a way that the coordinate measuring device (10, 30, 44) has a constant or nearly constant temperature independent of the load of the heat-emitting element.

4. Coordinate measuring device according to at least one of the preceding claims,
**characterized in**
**that** the coordinate measuring device (30) comprises at least one drive motor (32), which can be operated alternately with a heat load resistor (34) such that resulting heat load is constant.

5. Coordinate measuring device according to at least one of the preceding claims,
**characterized in**
**that** the coordinate measuring device has an illumination device (42) that can be alternately controlled in one or several heat load resistors (52) in such a way that resulting heat load of the coordinate measuring device (44) is constant.

6. Method for operating a coordinate measuring device (10, 30, 44) with at least one heat-emitting element (32, 42) allocated to it and/or integrated with it, such as a motor or a light source, where an additional heat source (34, 52) is allocated to the element,
**characterized in**
**that** to each heat-emitting element (32, 42) an additional heat source (34, 52) is allocated and the additional heat source (34, 52) is adjusted such that the total load acting upon the operating coordinate measuring device (10, 30, 44) is kept constant or nearly constant.

7. Method according to claim 6,
**characterized in**
**that** load P₁ received or emitted from the heat-emitting element (32, 42) is measured and the additional heat source (34, 52) is operated with load P₂, wherein P₁ + P₂ = const. or P₁ + P₂ ≈ const.

8. Method according to claim 6 or 7,
**characterized in**
**that** a heat resistor (34, 52) is controlled as the additional heat source via the measured load P₁.

9. Method according to at least one of the preceding claims 6 to 8,
**characterized in**
**that** an adjustable heat resistor (34, 52) is allocated to each heat-emitting element (32, 42) in such a way that load P₁ of the heat-emitting element and load P₂ of the adjustable heat resistor is P₁ + P₂ = const. or P₁ + P₂ ≈ const.

10. Method according to at least one of the preceding claims 6 to 8,
**characterized in**
**that** a common adjustable heat resistor is allocated to several heat-emitting elements (32, 42).

11. Method according to at least one of the preceding claims 6 to 10,
**characterized in**
**that** the additional heat sources (34, 52) are allocated to the coordinate measuring device in such a way that it shows a constant or nearly constant temperature in its measurement influencing area, independent of the effective load of the heat-emitting element or elements.

12. Method according to at least one of the preceding claims 6 to 11,
**characterized in**
**that** one or more motors (32) of the coordinate measuring device (30) are operated alternately with heat resistors (34) in such a way that resulting heat load is constant.

13. Method according to at least one of the preceding claims 6 to 12,
**characterized in**
**that** lamps of an illumination device (42) of the coordinate measuring device are operated alternately with heat resistors, or are regulated with one another, in such a way that resulting heat load for the coordinate measuring device is constant or nearly constant.

## Revendications

1. Mesureur à coordonnées (10, 30, 44) avec au moins un élément (32, 42) délivrant de la chaleur, intégré dans et/ou associé à celui-ci, tel qu'un moteur ou une source lumineuse, ainsi qu'une source de chaleur d'appoint (34, 52) associée à l'élément (32, 42)
**caractérisé en ce que**
une source de chaleur d'appoint réglable (34, 52) est associée à chaque élément (32, 42) délivrant de la chaleur, et ce de telle façon que la puissance totale influençant le mesureur à coordonnées (10, 30, 44) soit constante ou pratiquement constante.

2. Mesureur à coordonnées selon la revendication 1,
**caractérisé en ce que**
la source de chaleur d'appoint est une résistance chauffante (34, 52).

3. Mesureur à coordonnées selon la revendication 1 ou 2,
**caractérisé en ce que**
la source de chaleur d'appoint (34, 52) est associée à l'élément (32, 42) délivrant de la chaleur de telle façon que le mesureur à coordonnées (10, 30, 44) présente, indépendamment de la puissance de l'élément délivrant la chaleur, une température constante ou pratiquement constante.

4. Mesureur à coordonnées selon au moins une des revendications précédentes,
**caractérisé en ce que**
le mesureur à coordonnées (30) présente au moins un moteur d'entraînement (32) pouvant être utilisé en alternance avec une résistance de charge thermique (34) de telle façon que la charge thermique résultante reste constante.

5. Mesureur à coordonnées selon au moins une des revendications précédentes,
**caractérisé en ce que**
le mesureur à coordonnées présente un éclairage (42) qui est réglable en alternance dans une ou plusieurs résistances de charge thermique (52), de telle façon que la charge thermique résultante du mesureur à coordonnées (44) reste constante.

6. Procédé pour l'exploitation d'un mesureur à coordonnées (10, 30, 44) avec au moins un élément (32, 42) délivrant de la chaleur intégré dans et/ou associé à celui-ci, tel qu'un moteur ou une source lumineuse, sachant qu'une source de chaleur d'appoint (34, 52) est associée à l'élément,
**caractérisé en ce que**
une source de chaleur d'appoint (34, 52) est associée à chaque élément (32, 42) délivrant de la chaleur et que la source de chaleur d'appoint (34, 52) est réglée de telle façon que la puissance totale influençant le mesureur à coordonnés (10, 30, 44) durant le fonctionnement reste constante ou pratiquement constante.

7. Procédé selon la revendication 6,
**caractérisé en ce que**
la puissance P₁ absorbée ou délivrée par l'élément (32, 42) délivrant de la chaleur est mesurée et la source de chaleur d'appoint (34, 52) exploitée à une puissance P₂, sachant que P₁ + P₂ est = const. ou P₁ + P₂ ≈ const.

8. Procédé selon la revendication 6 ou 7,
**caractérisé en ce que**
la puissance P₁ mesurée sert à régler une résistance chauffante (34, 52) en tant que source de chaleur d'appoint.

9. Procédé selon au moins une des revendications 6 à 8,
**caractérisé en ce que**
une résistance chauffante réglable (34, 52) est associée à chaque élément (32, 42) délivrant de la chaleur, de telle façon que la puissance P₁ de l'élément délivrant de la chaleur et la puissance P₂ de la résistance chauffante réglable prennent des valeurs telles que P₁ + P₂ = const. ou P₁ + P₂ ≈ const.

10. Procédé selon au moins une des revendications 6 à 8,
**caractérisé en ce que**
une résistance chauffante réglable commune est associée à plusieurs éléments (32, 42) délivrant de la chaleur.

11. Procédé selon au moins une des revendications 6 à 10,
**caractérisé en ce que**
les sources de chaleur d'appoint (34, 52) sont associées de telle façon au mesureur à coordonnées que celui-ci présente, dans sa plage influençant la mesure, une température constante ou pratiquement constante, indépendamment de la puissance effective du ou des éléments délivrant de la chaleur.

12. Procédé selon au moins une des revendications 6 à 11,
**caractérisé en ce que**
un ou plusieurs moteurs (32) du mesureur à coordonnées (30) peuvent fonctionner en alternance avec des résistances chauffantes (34), de telle façon que l'apport thermique résultant reste constant.

13. Procédé selon au moins une des revendications 6 à 12,
**caractérisé en ce que**
les lampes d'un éclairage (42) du mesureur à coordonnées sont actionnées en alternance avec des résistances chauffantes, ou réglées les unes par rapport aux autres, de telle façon que l'apport thermique résultant pour le mesureur à coordonnées soit constant ou pratiquement constant.
